# EUROPÄISCHE PATENTSCHRIFT

(11) **EP 1 259 732 B1**
(45) Veröffentlichungstag und Bekanntmachung des Hinweises auf die Patenterteilung: **11.01.2006**
(21) Anmeldenummer: 01913622.5
(22) Anmeldetag: 13.02.2001
(51) Int. Cl.: F02P 5/152

(54) **VERFAHREN ZUR STEUERUNG EINER BRENNKRAFTMASCHINE**
METHOD FOR CONTROLLING AN INTERNAL COMBUSTION ENGINE
PROCEDE DE COMMANDE D'UN MOTEUR A COMBUSTION INTERNE

(30) Priorität: 17.02.2000 DE 10007207
(43) Veröffentlichungstag der Anmeldung: 27.11.2002
(73) Patentinhaber: ROBERT BOSCH GMBH, 70442 Stuttgart (DE)
(72) Erfinder: NICOLAOU, Michael, 71665 Vaihingen (DE); NEUBERT, Juergen, 70469 Stuttgart (DE)
(86) Internationale Anmeldenummer: PCT/DE2001/000540
(87) Internationale Veröffentlichungsnummer: WO 2001/061170

(56) Entgegenhaltungen:
- DE-A- 19 651 238
- DE-A- 19 715 774
- DE-A- 19 740 365
- US-A- 4 971 007
- PATENT ABSTRACTS OF JAPAN vol. 010, no. 130 (M-478), 14. Mai 1986 (1986-05-14) & JP 60 256539 A (NIPPON DENSO KK), 18. Dezember 1985 (1985-12-18)

## Beschreibung

### Stand der Technik

Die Erfindung betrifft ein Verfahren zur Steuerung einer Brennkraftmaschine gemäß dem Oberbegriff des unabhängigen Patentanspruchs.

Ein derartiges Verfahren ist bereits aus der DE-OS 19715774 bekannt. In dieser Druckschrift wird ein Verfahren beschrieben, dass der Steuerung einer Brennkraftmaschine dient, wobei wenigstens eine Betriebsgröße der Brennkraftmaschine gesteuert wird. Eine Betriebsgröße ist hierbei beispielsweise der Zündwinkel. Die wenigstens eine Betriebsgröße wird dabei anhand eines Sollmoments ermittelt, der sich aus dem optimalen Arbeitspunkt für den jeweiligen Betriebszustand und aus der Stellung der vom Fahrer betätigten Drosselklappe ergibt. Ein sich aus einer Klopfregelung ergebender Zündwinkelspätverstellwert wird zur Bestimmung eines Basiszündwinkelwirkungsgrads herangezogen. In bestimmten Betriebszuständen dient dieser Basiszündwinkelwirkungsgrad jedoch nicht zur Bildung eines Sollmoments, sondern das Sollmoment wird aufgrund einer Minimalwertauswahl aus Wirkungsgradwerten anderer Kennfeldern bestimmt. Somit ist in bestimmten Betriebszuständen, beispielsweise in Leerlauf oder bei Teillast, eine Klopfregel-Korrektur des Sollmoments und somit auch des Zündwinkels oder anderer Betriebsgrößen nicht ausreichend gewährleistet.

Aus der DE 197 40 365 A1 ist bereits ein Verfahren zur Ermittlung von Zündwinkeln einer Brennkraftmaschine bekannt, bei dem ein für das gewünschte Drehmoment optimaler Zündwinkel bestimmt wird. Aus der US 49 71 007 ist bereits ein Verfahren zur Bestimmung eines Zündwinkels einer Brennkraftmaschine bekannt, bei dem zylinderindividuelle Klopfereignisse berücksichtigt werden.

### Vorteile der Erfindung

Das erfindungsgemäße Verfahren mit den Merkmalen des Anspruchs 1 hat dem gegenüber den Vorteil, dass ein sich aus der Klopfregelung ergebender zylinderindividueller Zündwinkelverstellwert direkt bei der Bestimmung des Sollmoments und somit für alle Betriebszustände berücksichtigt wird.

Durch die in den Unteransprüchen aufgeführten Maßnahmen sind vorteilhafte Weiterbildungen des im Hauptanspruch angegebenen Verfahrens möglich. Besonders vorteilhaft ist, wenn der zylinderindividuelle Zündwinkelverstellwert zunächst über einen Motorzyklus gemittelt wird, bevor der daraus resultierende Wert zur Bestimmung des Sollmoments direkt herangezogen wird, da das Sollmoment keine zylinderspezifische Größe darstellt und auch die aus dem Sollmoment berechneten Betriebsgrößen zunächst keine zylinderspezifischen Werte darstellen.

Es ist weiterhin vorteilhaft, aus dem Sollmoment den auszugebenden Zündwinkel zu berechnen, der momentenbasiert berechnet wird und somit unabhängig vom Betriebszustand der Brennkraftmaschine eine Klopfregelkorrektur aufweist.

Von Vorteil ist weiterhin, dass der berechnete Zündwinkel durch einen Wert korrigiert wird, der die zylinderindividuelle Klopfregelkorrektur beinhaltet, da so die Anforderungen jedes einzelnen Zylinders berücksichtigt werden können. Dabei ist es vorteilhaft, zu einem berechneten Sollzündwinkel die Differenz aus dem Mittelwert der zylinderindividuellen Zündwinkelspätverstellwerte und dem zu dem jeweiligen Zylinder zugeordneten zylinderindividuellen Zündwinkelspätverstellwert addiert wird. Somit kann die zylinderindividuelle Zündwinkelspätverstellung berücksichtigt werden, ohne dass das Sollmoment, das keine zylinderindividuelle Größe darstellt, beeinflusst wird.

Bei der Berechnung des Zündwinkelspätverstellwerts ist es vorteilhaft, dass sich der zylinderindividuelle Zündwinkelspätverstellwert aus einem aktuellen Zündwinkelspätverstellwert und einem Klopfschutzwert zusammensetzt, wobei der zylinderindividuelle Zündwinkelspätverstellwert aufgrund des Klopfsignals für den jeweiligen Zylinder ermittelt wird und der Klopfschutzwert sich auf einen Klopfschutz in bestimmten Betriebszuständen oder einen Klopfschutz über längere Zeiträume bezieht.

Für die Startphase ist es vorteilhaft, einen zusätzlichen Zündwinkelspätverstellwert für die Berechnung des zylinderindividuellen Zündwinkelspätverstellwerts zu berücksichtigen, da dies die Temperatur der Brennkraftmaschine im Zylinder und im Abgastrakt erfordert.

### Zeichnungen

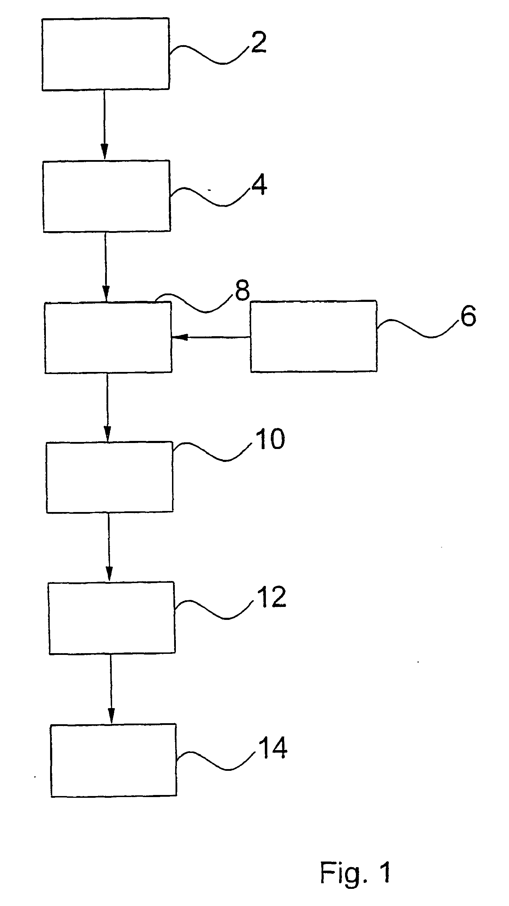

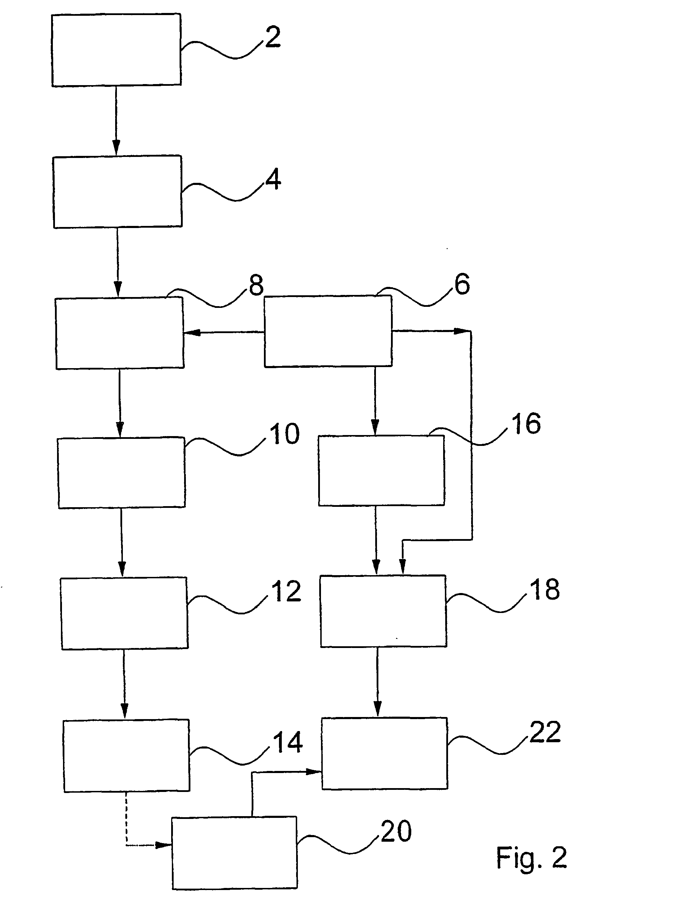

Die Erfindung wird nachstehend anhand der in den Zeichnungen dargestellten Ausführungsformen näher erläutert. Figur 1 zeigt ein Verfahren zur Steuerung einer Brennkraftmaschine anhand eines Ablaufdiagramms, Figur 2 zeigt ein weiteres erfindungsgemäßes Verfahren anhand eines weiteren Ablaufdiagramms.

### Beschreibung von Ausführungsbeispielen

In der Figur 1 ist ein erfindungsgemäßes Verfahren zur Steuerung einer Brennkraftmaschine anhand eines Ablaufprogramms dargestellt. Ausgangspunkt für das Verfahren bildet in Schritt 2 der Vorsteuerzündwinkelwirkungsgrad eta_zw_vst, der wie dies in der DE-OS 197 15 774 beschrieben ist, durch eine Minimalwertauswahl aus einem Vorgabezündwinkelwirkungsgrad und einem Basiszündwinkelwirkungsgrad bestimmt wird. Der Vorsteuerzündwinkelwirkungsgrad eta_zw_vst wird in einem Schritt 4 mittels einer nicht näher beschriebenen Kennlinie in einen zugehörigen Zündwinkel umgewandelt, der mit dzwvg bezeichnet wird. In Schritt 6 wird durch ein Klopfregelungssystem ein zylinderindividueller Spätverstellwert dzwkrd bereitgestellt. Dieser zylinderindividuelle Spätverstellwert dzwkrd wird in Schritt 8 von dem Zündwinkelwert dzwvg subtrahiert, woraus sich die Differenz der Zündwinkel dzwvgd ergibt. In einem sich daran anschließenden Schritt 10 erfolgt eine Mittelung der Differenzen der Zündwinkel dzwvgd über einen gesamten Zyklus der Brennkraftmaschine. Daraus ergibt sich der Mittelwert der Zündwinkeldifferenzen dzwvgdm. In einem sich daran anschließenden Schritt 12 wird mittels einer zweiten, nicht näher beschriebenen Kennlinie dieser Mittelwert der Zündwinkeldifferenzen dzwvgdm in einen Wirkungsgrad etazwvgd umgewandelt. Aus diesem Wirkungsgrad etazwvgd wird im anschließenden Schritt 14 durch Multiplikation mit dem optimalen induzierten Moment mi_opt das Sollmoment mi_fa berechnet. Die Berechnung des Sollmoments mi_fa erfolgt dabei analog zu der in der DE-OS 197 15 774 geschilderten Weise, die dort anhand des Multiplizierelements 124 beschrieben wird. Somit ist es möglich, das Sollmoment mi_fa für alle Betriebszustände unter Berücksichtigung eines Zündwinkelverstellwertes aus der Klopfregelung zu berechnen. Da dieses Verfahren in die in der DE-OS 197 15 774 beschriebene momentenbasierte Steuerung einer Brennkraftmaschine integriert werden soll, war es notwendig, von einem Wirkungsgrad, dem Vorsteuerzündwinkelwirkungsgrad mi_zw_vst auszugehen und einen neuen Wirkungsgrad etazwvgd zu berechnen, der die Zündwinkelspätverstellung aus der Klopfregelung berücksichtigt. Die in Schritt 4 erfolgende Umwandlung in einen Zündwinkel ist notwendig, da nur gleichartige Werte, d.h. Zündwinkel, miteinander verglichen werden können. Eine Mittelung der Zündwinkeldifferenzwerte dzwvgd erfolgt deshalb, weil auch das daraus berechnete Sollmoment mi_fa ein Mittelwert über einen Zyklus der Brennkraftmaschine darstellt und als dieser auch bei der Berechnung weiterer Betriebsgrößen der Brennkraftmaschine berücksichtigt wird. In einer weiteren Ausführungsform kann eine Mittelung auch derart erfolgen, dass der Spätverstellwert dzwkrd erst gemittelt wird, bevor er von dem Zündwinkelwert dzwvg subtrahiert wird.

In Figur 2 ist ein weiteres Ausführungsbeispiel des erfindungsgemäßen Verfahrens zur Steuerung einer Brennkraftmaschine dargestellt. Das dort dargestellte Verfahren enthält Schritte mit Bezugszeichen, die bereits in Figur 1 genannt werden. Diese Schritte sollen hier nicht noch einmal erläutert werden, da sie die gleichen Verfahrensschritte beinhalten. In diesem Ausführungsbeispiel wird der zylinderindividuelle Spätverstellwert dzwkrd in einem Schritt 16 über einen Zyklus der Brennkraftmaschine gemittelt. Daraus resultiert der Mittelwert dzwkrdm. In einem darauffolgenden Schritt 18 wird vom zylinderindividuellen Spätverstellwert dzwkrd der in Schritt 16 bestimmte Mittelwert dzwkrdm subtrahiert, woraus sich der Differenzwert ddzwkrd in Schritt 18 ergibt. Weiterhin wird aus dem in Schritt 14 bestimmten Sollmoment mi_fa analog zu der in der DE-OS 197 15 774 beschriebenen Vorgehensweise ein Sollzündwinkel zw_soll berechnet, das hier anhand von Schritt 20 symbolisiert wird. Zu diesem Sollzündwinkel wird in Schritt 22 der in Verfahrensschritt 18 bestimmte Differenzwert ddzwkrd addiert, woraus sich der auszugebende Zündwinkel zw_out ergibt. Durch die anhand der Figur 2 beschriebene Vorgehensweise wird erreicht, dass bei einem Sollzündwinkel, bei dem ein gemittelter Zündwinkelspätverstellwert berücksichtigt wurde, eine zylinderindividuelle Spätverstellung vorgenommen wird. Damit lassen sich die Eigenschaften der einzelnen Zylinder optimal bei der Ausgabe des Zündwinkels berücksichtigen.

Sowohl bei der anhand von Figur 1 als auch anhand von Figur 2 beschriebenen Ausführungsbeispiele kann in einem bevorzugten Ausführungsbeispiel bei dem von der Klopfregelung bereitgestellten zylinderindividuellen Spätverstellwert dzwkrd eine betriebspunktabhängige, zylinderindividuelle Zündwinkelspätvestellung dwkr und ein Klopfschutz dzwks berücksichtigt werden, wobei sich die Werte dwkr und dzwks zu dem zylinderindividuellen Spätverstellwert dzwkrd addieren. Somit ist gewährleistet, dass sowohl eine sich aus der Klopfregelung im jeweiligen Betriebspunkt für den jeweiligen Zylinder ermittelte Zündwinkelspätverstellung als auch ein Klopfschutz berücksichtigt wird, der sich aus bestimmten Betriebszuständen oder einer sich über längere Zeiträume erstreckende Spätverstellung ergibt. Insbesondere kann weiterhin ein Zündwinkelverstellwert dzwwl berücksichtigt werden, der ebenfalls zu den Werten dwkr und dzwks addiert wird, um dzwkrd zu ergeben (d.h dwkr+dzwks+dzwwl=dzwkrd), so dass beim Warmlaufen der Brennkraftmaschine ein weiterer Zündwinkelspätverstellwert berücksichtigt wird. Dies ist aufgrund der Temperaturverhältnisse im Zylinder und im Abgastrakt der Brennkraftmaschine notwendig.

## Patentansprüche

1. Verfahren zur Berechnung eines Zündwinkels einer Brennkraftmaschine, wobei ein Sollmoment (mi_fa) aus einer Multiplikation eines Zündwinkelwirkungsgrad (etazwvgd) mit einem optimalen Moment (mi_opt) berechnet wird, wobei eine Stellung einer Drosselklappe die von einem Fahrer vorgegeben wird für das Sollmonent (mi_fa) berücksichtigt wird, wobei aus dem Sollmoment (mi_fa) ein Sollwert des Zündwinkels (zw_soll) ermittelt wird, wobei durch eine Klopfregelung ein zylinderindividueller Zündwinkelspätverstellwert (dzwkrd) vorgegeben wird, **dadurch gekennzeichnet, dass** der zylinderindividuelle Zündwinkelspätverstellwert (dzwkrd) bei der Berechnung des Zündwinkelwirkungsgrads (etazwvgd) berücksichtigt wird.

2. Verfahren nach Anspruch 1 **dadurch gekennzeichnet, dass** der Zündwinkelwirkungsgrad (etazwvgd) aus einem resultierenden Zündwinkelspätverstellwert (dzwvgdm) ermittelt wird, wobei der resultierende Zündwinkelspätverstellwert (dzwvgdm) als Mittelwert aus den zylinderindividuellen Zündwinkelspätverstellwerten (dzwvgd) über einen Motorzyklus gebildet wird.

3. Verfahren nach einem der vorhergehenden Ansprüche, **dadurch gekennzeichnet, dass** bei der Bildung des Wertes des auszugebenden Zündwinkels (zw_out) der zylinderindividuelle Zündwinkelspätverstellwert (dzwkrd) zusätzlich derart berücksichtigt wird, dass zu dem Sollzündwinkel (zw_soll) die Differenz (ddzwkrd) aus dem Mittelwert der zylinderindividuellen Zündwinkelspätverstellwerte (dzwkrdm) und dem zu dem jeweiligen Zylinder zugeordneten zylinderindividuellen Zündwinkelspätverstellwert (dzwkrd) addiert wird.

4. Verfahren nach einem der vorhergehenden Ansprüche, **dadurch gekennzeichnet, dass** sich der zylinderindividuelle Zündwinkelspätverstellwert (dzwkrd) aus einem betriebspunktabhängigen Zündwinkelspätverstellwert (dwkr) und einem Klopfschutzwert (dzwks) zusammensetzt.

5. Verfahren nach Anspruch 4, **dadurch gekennzeichnet, dass** für den zylinderindividuellen Zündwinkelspätverstellwerte zusätzlich ein Spätverstellwert für die Startphase (dzwwl) berücksichtigt wird.

## Claims

1. Method for calculating an ignition angle of an internal combustion engine, wherein a setpoint torque (mi_fa) is calculated from a multiplication of an ignition angle efficiency value (etazwvgd) by an optimum torque (mi_opt), wherein a position of a throttle valve which is predefined by a driver is taken into account for the setpoint torque (mi_fa), wherein a setpoint value of the ignition angle (zw_soll) is determined from the setpoint torque (mi_fa), wherein a cylinder-specific ignition angle retarded adjustment value (dzwkrd) is predefined by a knocking regulator, **characterized in that** the cylinder-specific ignition angle retarded adjustment value (dzwkrd) is taken into account in the calculation of the ignition angle efficiency value (etazwvgd).

2. Method according to Claim 1, **characterized in that** the ignition angle efficiency value (etazwvgd) is determined from a resulting ignition angle retarded adjustment value (dzwvgdm), wherein the resulting ignition angle retarded adjustment value (dzwvgdm) is formed as a mean value from the cylinder-specific ignition angle retarded adjustment values (dzwvgd).

3. Method according to one of the preceding claims, **characterized in that** when the value of the ignition angle (zw_out) which is to be output is formed, the cylinder-specific ignition angle retarded adjustment value (dzwkrd) is additionally taken into account in such a way that the difference (ddzwkrd) between the mean value of the cylinder-specific ignition angle retarded adjustment values (dzwkrdm) and the cylinder-specific ignition angle retarded adjustment value (dzwkrd) which is assigned to the specific cylinder is added to the setpoint ignition angle (zw_soll).

4. Method according to one of the preceding claims, **characterized in that** the cylinder-specific ignition angle retarded adjustment value (dzwkrd) is composed of an operating-point-dependent ignition angle retarded adjustment value (dwkr) and a knocking protection value (dzwks).

5. Method according to Claim 4, **characterized in that** a retarded adjustment value for the starting phase (dzwwl) is additionally taken into account for the cylinder-specific ignition angle retarded adjustment values.

## Revendications

1. Procédé pour calculer un angle d'allumage d'un moteur à combustion interne dans lequel un couple de consigne (mi_fa) est calculé par multiplication d'un rendement de l'angle d'allumage (etazwvgd) par un couple optimal (mi_opt), une position du volet de réglage choisie par un conducteur étant prise en considération pour le couple de consigne (mi_fa) et une valeur de consigne de l'angle d'allumage (zw_soll) étant déterminée sur la base du couple de consigne (mi_fa), cependant qu'une régulation de cliquetis prédétermine une valeur de retardement de l'angle d'allumage individuelle par cylindre (dzwkrd),
**caractérisé en ce que**
la valeur de retardement de l'angle d'allumage (dzwkrd) individuelle par cylindre est prise en compte pour le calcul du rendement de l'angle d'allumage (etazwvgd).

2. Procédé selon la revendication 1,
**caractérisé en ce que**
le rendement de l'angle d'allumage (etazwvgd) est déterminé sur la base d'une valeur de retardement de l'angle d'allumage (dzwvdgm) résultante, la valeur de retardement de l'angle d'allumage (dzwvdgm) résultante étant formée par la moyenne des valeurs de retardement de l'angle d'allumage (dzwvdgm) individuelles par cylindre sur un cycle du moteur.

3. Procédé selon une des revendications précédentes,
**caractérisé en ce que**
pour la formation de la valeur de l'angle d'allumage à émettre (zw_out), la valeur de retardement de l'angle d'allumage (dzwkrd) individuelle par cylindre est en outre prise en compte en ce sens qu'à l'angle d'allumage de consigne (zw_soll), on ajoute la différence (ddzwkrd) entre la moyenne des valeurs de retardement de l'angle d'allumage (dzwkrdm) individuelles par cylindre et la valeur de retardement de l'angle d'allumage (dzwkrd) individuel par cylindre correspondant au cylindre concerné.

4. Procédé selon une des revendications précédentes,
**caractérisé en ce que**
la valeur de retardement de l'angle d'allumage (dzwkrd) individuelle par cylindre est composée d'une valeur de retardement de l'angle d'allumage (dwkr) fonction du point de fonctionnement et d'une valeur de protection anti-cliquetis (dzwks).

5. Procédé selon la revendication 4,
**caractérisé en ce que**,
pour les valeurs de retardement de l'angle d'allumage individuelles par cylindre, on prend en outre en compte une valeur de retardement pour la phase de démarrage (dzwwl).
